**Europäisches Patentamt**

**European Patent Office**

**Office européen des brevets**

(19)

(11) Numéro de publication : **0 147 875**
**B1**

(12) ## FASCICULE DE BREVET EUROPÉEN

(45) Date de publication du fascicule du brevet :
30.12.86

(51) Int. Cl.⁴ : **A 47 J 37/12**, A 47 J 27/62

(21) Numéro de dépôt : **84201608.1**

(22) Date de dépôt : **08.11.84**

(54) Friteuse.

(30) Priorité : 16.11.83 CH 6148/83

(43) Date de publication de la demande :
10.07.85 Bulletin 85/28

(45) Mention de la délivrance du brevet :
30.12.86 Bulletin 86/52

(84) Etats contractants désignés :
AT BE DE FR GB IT NL SE

(56) Documents cités :
US-A- 3 217 633
US-A- 3 894 483

(73) Titulaire : **Wenger, Frédy**
**Chemin de l'Ormet, 17A**
**CH-1024 Ecublens (CH)**

(72) Inventeur : **Wenger, Frédy**
**Chemin de l'Ormet, 17A**
**CH-1024 Ecublens (CH)**

(74) Mandataire : **Meylan, Robert Maurice et al**
**c/o BUGNION S.A. 10, route de Florissant Case**
**Postale 375**
**CH-1211 Genève 12 - Champel (CH)**

EP 0 147 875 B1

## Description

La présente invention a pour objet une friteuse comprenant une cuve à huile, un panier destiné à recevoir le produit à frire, un corps de chauffe immergé contrôlé par un thermostat déclenchant le corps de chauffe lorsque l'huile atteint une température déterminée, et des moyens pour réduire la chute de température due au temps de réponse du thermostat, lors de l'immersion du panier.

On connaît déjà une friteuse correspondant au préambule de la revendication 1 (US-A-3 894 483).

Le corps de chauffe peut être électrique ou à gaz.

Les différents aliments pouvant être frits dans de telles friteuses doivent être frits à des températures adéquates qui diffèrent d'un aliment à l'autre. L'opérateur choisit sur l'échelle du thermostat la température adéquate et ce thermostat est chargé de maintenir l'huile à cette température en enclenchant et déclenchant le circuit du corps de chauffe. Une lampe de signalisation branchée en parallèle avec le corps de chauffe permet à l'utilisateur de savoir à quel moment la température désirée est atteinte. Dès que le thermostat déclenche le corps de chauffe, la lampe de signalisation s'éteint et l'utilisateur peut alors immerger dans l'huile le panier contenant les aliments à frire.

De nos jours, on utilise de plus en plus des aliments congelés tels que pommes frites, croquettes, poissons, cuisses de poulets, etc. Ces derniers sont immergés dans l'huile chaude à l'état congelé, c'est-à-dire à une température de moins 17° à moins 25 °C environ. Cette immersion provoque une brusque et forte chute de la température de l'huile. Cette chute est d'autant plus forte que le temps de réaction des thermostats capillaires utilisés dans la presque totalité des friteuses est de l'ordre de 30 à 40 secondes. On a déjà proposé de limiter cette chute de température en équipant la friteuse d'une minuterie auxiliaire (US-A-3 894 483) qui est enclenchée simultanément à la mise en marche des moyens d'immersion du panier et qui neutralise le thermostat en enclenchant le chauffage. Le thermostat prend ensuite le relais de la minuterie auxiliaire. La chute de température est ainsi limitée et on réalise un gain de temps et d'énergie.

La présente invention a pour but d'améliorer encore les gains de temps et d'énergie.

La friteuse selon l'invention, telle que définie par les caractéristiques de la revendication 1, permet d'immerger le panier avant que la température de déclenchement du corps de chauffe soit atteinte, de telle sorte que le corps de chauffe reste enclenché et que non seulement on supprime les enclenchements et déclenchements successifs du corps de chauffe, mais qu'on gagne un temps considérable sur un cycle de cuisson. En outre, la température maximale est abaissée, ce qui améliore la qualité des aliments frits.

Des modes particuliers de réalisation de l'invention apparaissent dans les revendications 2-4.

Les moyens de signalisation sont, de préférence, constitués par une lampe ou une sonnerie commandée par un commutateur supplémentaire du thermostat de travail.

L'invention sera mieux comprise au moyen de la description d'exemples d'exécution faite en référence au dessin annexé.

La figure 1 représente le schéma électrique d'une première forme d'exécution.

La figure 2 représente le schéma électrique d'une seconde forme d'exécution.

La figure 3 représente les diagrammes comparatifs entre une friteuse conventionnelle et une friteuse selon l'invention en ce qui concerne l'enclenchement du corps de chauffe.

La figure 4 représente un diagramme comparatif entre une friteuse conventionnelle et une friteuse selon l'invention en ce qui concerne la température et la durée du cycle de travail.

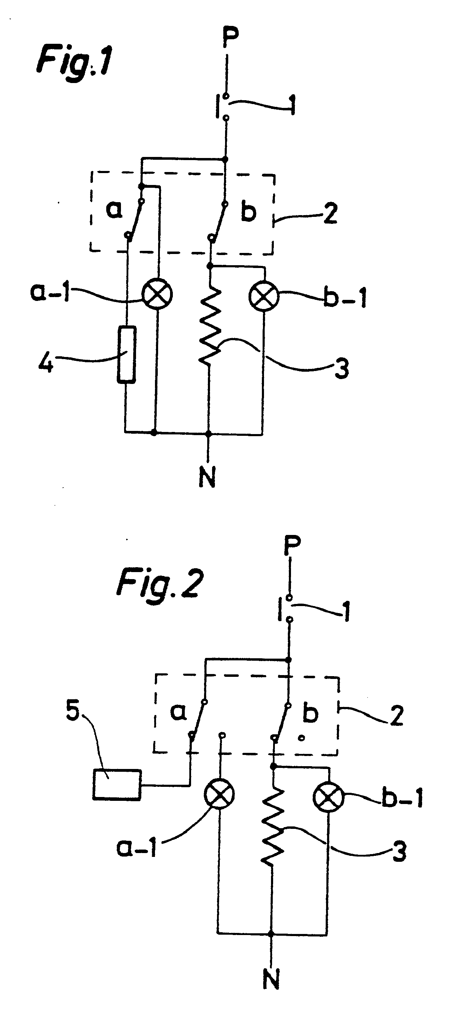

Le schéma représenté à la figure 1 montre un interrupteur principal 1 monté entre une phase P et le neutre N, un thermostat 2 de type conventionnel comprenant deux contacts de repos a et b, un corps de chauffe 3, une lampe de signalisation b-1 branchée en parallèle au corps de chauffe 3 et indiquant que ce corps de chauffe est alimenté lorsqu'elle est allumée, une seconde lampe de signalisation a-1 montée en parallèle au contact a et à une résistance de shunt 4.

Le thermostat 2 est réglable sur une plage d'environ 150 à 200 °C. Ces deux contacts a et b sont entraînés par la même mécanique du thermostat, cette mécanique étant réglée de telle sorte que le contact a déclenche à une température inférieure de 5 à 7° à la température d'ouverture du contact b chargé de régler la température de l'huile. Lorsque le contact a s'ouvre, la résistance de shunt 4 n'est plus branchée et la lampe a-1 s'allume, indiquant à l'utilisateur que la température de travail va être atteinte de manière imminente et qu'il peut immerger le panier. Comme ceci ressortira des diagrammes qui suivent, la lampe de signalisation b-1 est facultative, car, contrairement aux friteuses selon l'art antérieur, le corps de chauffe va être enclenché de façon continue.

Dans l'exécution représentée à la figure 2 le thermostat 2 comporte deux contacts de commutation a et b. Au repos, le circuit de la lampe de signalisation a-1 est ouvert.

Le temps de réaction du thermostat 2 est de l'ordre de 30 à 40 secondes, ce qui signifie qu'après immersion du panier contenant les aliments dans l'huile, le corps de chauffe 3 n'est enclenché qu'après 30 à 40 secondes. Ce temps de réaction relativement long est dû à trois facteurs. Le premier est l'inertie du thermostat. Le second est l'emplacement du bulbe du thermostat, qui est placé nécessairement à proximité du corps de chauffe dans le but d'éviter un dépassement de température à la montée, exigence des instituts de contrôle officiels. Le troisième facteur est constitué par le dégagement de chaleur accumulée dans la masse du corps de chauffe, du fait que le centre des barres chauffantes atteint une température de 300 à 400 °C. Après interruption du circuit de chauffe, le corps de chauffe continue donc à chauffer l'huile et le tâteur du thermostat pendant un certain temps.

La lampe de signalisation a-1 s'allume environ 15 secondes avant le déclenchement du corps de chauffe. En introduisant le panier dès que la lampe a-1 s'allume, on évite le déclenchement du thermostat et l'interruption de l'apport calorifique du corps de chauffe.

Selon les instructions des fabricants de frites congelées, par exemple, la préparation doit se faire comme suit :

1. Plonger les frites congelées dans l'huile à 190/200 °C durant une minute.

2. Sortir les frites. Chauffer à nouveau l'huile à une température de 190 à 200 °C.

3. Remettre les frites dans l'huile pendant une minute pour terminer la cuisson.

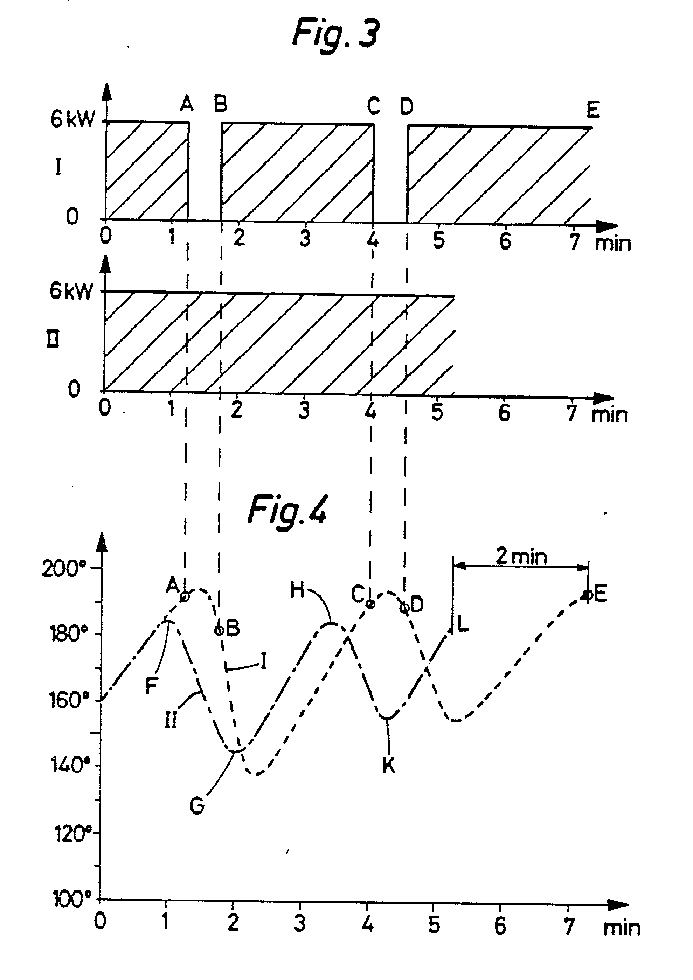

Le diagramme 1, figure 3, illustre le fonctionnement du corps de chauffe en fonction du temps indiqué en minutes, pour la friture de mets congelés, selon les instructions ci-dessus.

L'évolution correspondante de la température est représentée à la figure 4 par les deux courbes I et II.

Dans une friteuse selon l'art antérieur (I), le thermostat déclenche le corps de chauffe une première fois à un instant A lorsque la température de l'huile a atteint environ 190 °C. Le panier est alors immergé pendant une minute. La température de l'huile descend immédiatement et rapidement, mais le thermostat ne réenclenche qu'au bout de 30 à 40 secondes à l'instant B. La température remonte jusqu'à ce que le thermostat déclenche à nouveau à l'instant C. Le panier est alors réimmergé pendant une minute. La température de l'huile redescend et le thermostat réenclenche le corps de chauffe après 30 à 40 secondes au point D. Au bout d'une minute, la cuisson est terminée et le panier est sorti. La température de l'huile peut remonter jusqu'au point de déclenchement E.

Avec la friteuse selon l'invention, le corps de chauffe reste en principe enclenché de façon continue pendant tout le cycle de chauffage et de cuisson. En effet, lorsque la température atteint environ 185 °C, le contact a travaillé et la lampe a-1 s'allume (point F). L'utilisateur immerge alors le panier contenant les mets congelés et la température chute brusquement. Au bout d'une minute (point G), le panier est sorti et la température remonte. Lorsqu'elle atteint à nouveau une température d'environ 185 °C, l'utilisateur peut immerger à nouveau le panier pour la cuisson (point H). Au bout d'une minute, le panier est sorti (point K) et la température de l'huile remonte, l'allumage de la lampe a-1 (point L) indiquant qu'une nouvelle charge d'aliments congelés peut être immergée. On constate que non seulement on supprime les enclenchements et déclenchements successifs du corps de chauffe, mais qu'on gagne environ deux minutes sur le cycle de cuisson. En outre, malgré l'introduction des aliments à une température d'huile inférieure à la température prescrite, la chute de température est moins grande et l'attente pour atteindre à nouveau la température désirée est plus courte. On constate en outre que durant le temps de 60 secondes pendant lequel les aliments se trouvent dans l'huile, le corps de chauffe est enclenché 20 à 30 secondes pour une friteuse conventionnelle, alors qu'il est enclenché pendant 60 secondes avec la friteuse selon l'invention. L'apport calorifique du corps de chauffe est donc pratiquement doublé.

En conclusion, le rendement de la friteuse est augmenté d'environ 20 % et la qualité des aliments frits est améliorée étant donné que la température maximale de l'huile est abaissée.

Si la friteuse est équipée d'un dispositif électromécanique de descente et de remontée du panier, il est possible de prévoir un dispositif de blocage empêchant une descente du panier avant que la température de l'huile soit suffisante, c'est-à-dire avant que la courbe de température II ait atteint l'un des points F ou H. A cet effet, on peut utiliser la borne de repos du commutateur a du circuit selon figure 2 pour alimenter un verrou électromagnétique 5.

**Revendications**

1. Friteuse comprenant une cuve à huile, un panier destiné à recevoir le produit à frire, un corps de chauffe (3) immergé contrôlé par un thermostat (2) déclenchant le corps de chauffe (3) lorsque l'huile atteint une température déterminée, et des moyens pour réduire la chute de température due au temps de réponse du thermostat, lors de l'immersion du panier, caractérisée par le fait que ces moyens sont constitués par un dispositif de signalisation (a-1) indiquant le déclenchement imminent du circuit de chauffage, du corps de chauffe (3), ce dispositif de signalisation (a-1) étant commandé par le contact (a) d'un thermostat opérant à une température inférieure à la température de déclenchement du corps de chauffe.

2. Friteuse selon la revendication 1, caractérisée par le fait que le contact (a) commandant le dispositif de signalisation est un commutateur supplémentaire du thermostat (2) de contrôle.

3. Friteuse selon la revendication 2 comprenant un thermostat (2) réglable entre environ 150 °C et 200 °C équipé de deux micro-rupteurs (a, b), caractérisée par le fait que le premier micro-rupteur (a) travaille à une température de 5 à 10 °C inférieure à la température à laquelle travaille le second micro-rupteur (b), ceci sur toute la plage de réglage du thermostat, le premier micro-rupteur (a) constituant ledit commutateur supplémentaire commandant ledit moyen de signalisation.

4. Friteuse selon l'une des revendications 2 ou 3 comprenant un dispositif de descente et de remontée du panier, caractérisée par le fait qu'elle comprend un moyen de blocage (5) du dispositif de descente du panier contrôlé par le commutateur supplémentaire (a) du thermostat.

## Claims

1. A deep fryer comprising an oil tank, a basket intended to receive the product to be fried, an immersed heater (3) controlled by a thermostat (2) which disconnects the heater (3) when the oil reaches a given temperature, and means for reducing the drop in temperature which is due to the response time of the thermostat upon the immersion of the basket, characterized by the fact that these means are formed by a signal device (a-1) which indicates the imminent disconnection of the heating circuit (1) of the heater (3), this signalling device (a-1) being controlled by the contact (a) of a thermostat operating at a temperature below the temperature for the disconnecting of the heater.

2. A deep fryer according to Claim 1, characterized by the fact that the contact (a) which controls the signal device is a supplementary switch of the control thermostat (2).

3. A deep fryer according to Claim 2 which comprises a thermostat (2) which can be adjusted between about 150 °C and 200 °C and is equipped with two microbreakers (a, b), characterized by the fact that the first microbreaker (a) operates at a temperature which is 5° to 10 °C below the temperature at which the second microbreaker (b) operates, this over the entire range of adjustment of the thermostat, the first microbreaker (a) constituting the said supplementary switch which controls the said signal means.

4. A deep fryer according to either of Claims 2 and 3, comprising a device for the lowering and raising of the basket, characterized by the fact that it comprises a means (5) for locking the basket lowering device, controlled by the supplementary switch (a) of the thermostat.

## Patentansprüche

1. Frittiergerät mit einem Oelbehälter, einem Korb zum Aufnehmen des Frittiergutes und einem eingetauchten Heizkörper (3), welcher von einem Thermostat (2) gesteuert wird, der den Heizkörper (3) abschaltet, wenn das Oel eine vorbestimmte Temperatur erreicht, sowie mit einer Einrichtung zur Verminderung des durch die Ansprechzeit des Thermostaten bedingten Temperaturabfalles beim Eintauchen des Korbes, dadurch gekennzeichnet, dass diese Einrichtung aus einer Anzeigevorrichtung (a-1) besteht, welche die kurz bevorstehende Abschaltung des Heizschaltkreises für den Heizkörper (3) anzeigt, indem diese Anzeigevorrichtung (a-1) von dem Kontakt (a) eines Thermostaten gesteuert wird, der bei einer Temperatur unterhalb der Abschalttemperatur des Heizkörpers arbeitet.

2. Frittiergerät nach Anspruch 1, dadurch gekennzeichnet, dass der die Anzeigevorrichtung steuernde Kontakt (a) ein zusätzlicher Schalter des Steuerthermostaten (2) ist.

3. Frittiergerät nach Anspruch 2 mit einem zwischen etwa 150 °C und 200 °C einstellbaren und mit zwei Mikroschaltern (a, b) ausgestatteten Thermostat (2), dadurch gekennzeichnet, dass der erste Mikroschalter (a) bei einer Temperatur von 5 °C bis 10 °C unterhalb der Temperatur arbeitet, bei welcher der zweite Mikroschalter (b) arbeitet, und zwar über den ganzen Einstellbereich des Thermostaten, wobei der erste Mikroschalter (a) dieser zusätzliche Schalter ist, welcher die Anzeigevorrichtung steuert.

4. Frittiergerät nach einem der Ansprüche 2 oder 3 mit einer Absenk- und Anhebvorrichtung für den Korb, dadurch gekennzeichnet, dass eine Blockierungseinrichtung (5) für die Absenkvorrichtung des Korbes vorgesehen ist, welche von dem zusätzlichen Schalter (a) des Thermostaten gesteuert wird.

0 147 875

**Fig.1**

**Fig.2**

Fig. 3

Fig. 4